# DEMANDE DE BREVET EUROPEEN

(11) **EP 2 538 353 A1**
(43) Date de publication de la demande: **26.12.2012**
(21) Numéro de dépôt: 12171829.0
(22) Date de dépôt: 13.06.2012
(51) Int. Cl.: G06F 17/30

(54) **Procédé d'affichage d'un contenu numérique sur un écran**

(30) Priorité: 21.06.2011 FR 1155463
(71) Demandeur: FRANCE TELECOM, 75015 Paris (FR)
(72) Inventeur: Arslan, Yunus, 14000 CAEN (FR); Auvray, Vincent, 50460 TONNEVILLE (FR)

(57) **Abrégé**

L'invention à trait à un procédé d'affichage d'un contenu numérique sur un écran d'un ordinateur incluant des moyens de stockage pour stocker un contenu à afficher sur l'écran et un module d'affichage dont une exécution entraîne une création d'une instance dudit module, caractérisé en ce que ledit procédé comprend
a. une étape d'obtention de subdivisions (P1-Pn) du contenu,
b. Une étape d'exécution au cours de laquelle le module (NAV) est exécuté plusieurs fois pour créer plusieurs instances dudit module, les instances crées étant associées à des subdivisions respectives (P1-Pn),
c. Une étape de stockage d'une pluralité d'instances dans les moyens de stockage et d'affichage d'une instance choisie parmi la pluralité d'instances stockées.

## Description

### Domaine technique

L'invention se rapporte à un procédé de lecture d'un contenu numérique sur un écran d'un terminal. L'invention s'applique tout particulièrement aux contenus de type livre électronique ayant un format tel que la lecture de l'ensemble du contenu sur un écran nécessite un déplacement du contenu sur l'écran. Un tel contenu est par exemple un livre subdivisé en pages aptes à être lues horizontalement.

Rappelons qu'un déplacement d'un contenu sur un écran peut être réalisé suite à une commande de défilement émise suite à une action d'un utilisateur par exemple sur un écran tactile ou sur un clavier.

Le format en question est par exemple le format EPUB (acronyme de « publication électronique », parfois noté ePub, EPub ou epub), le format HTML ( acronyme anglo-saxon de "HyperText Markup Language), xHTML ( acronyme anglo-saxon de "eXtensible HyperText Markup Language), ou PDF ( acronyme anglo-saxon de "Portable Document Format") ", etc.

Le terminal en question inclut des ressources physiques et logicielles dont un processeur et un écran pour l'affichage du contenu.

### Etat de la technique

Plusieurs formats sont disponibles pour structurer un livre numérique. Le format EPUB, parfois noté ePub ou EPub ou encore epub, est le format majoritairement utilisé.

Concrètement, un livre au format EPUB est divisé en chapitres représentés sous forme d'une page XHTML aussi appelé format WEB.

Le format WEB, connue de l'homme du métier, est de nature conçu pour afficher un contenu de manière verticale. Ainsi, si un contenu est affiché par le biais d'un navigateur internet, par exemple un chapitre d'un livre électronique, son contenu est visualisé en le déplaçant de haut en bas. Or, le déplacement vertical d'un contenu n'est pas satisfaisant car le but recherché est de s'approcher au plus près de l'expérience de lecture d'un contenu au format papier, et donc du déplacement horizontal des pages lors de la lecture du contenu papier.

Une solution à ce problème existe. Cette solution comprend une suite d'étapes dont les suivantes. Nous partons ici du principe que le terminal apte à restituer le contenu est équipé d'un processeur relié au moins à une mémoire vive de type RAM (acronyme anglo-saxon de Read Access Memory). Rappelons qu'une mémoire RAM est une mémoire dans laquelle un processeur stocke des données au cours d'un traitement de données.

La solution en question comprend plusieurs étapes dont les suivantes.

Une première étape qui consiste à subdiviser le contenu en sous-ensembles, la taille d'une subdivision étant choisie de telle sorte qu'une subdivision peut être affichée et visualisée sur un écran sans qu'un défilement ne soit nécessaire, c'est-à-dire en plein écran. En d'autres mots, on subdivise un contenu en autant de pages plein écran que nécessaires. Les subdivisions sont ensuite stockées dans une mémoire non volatile de type ROM (acronyme anglo-saxon de Read Only Memory).

Une deuxième étape d'exécution consiste à exécuter un module d'affichage apte à lire un contenu, par un navigateur de type HTML. Il en résulte une création d'une fenêtre d'affichage représentative d'une instance de navigateur.

Une troisième étape d'affichage consiste à commander l'affichage du contenu dans la fenêtre par défilement des subdivisions. Cette étape inclut:
- une insertion des subdivisions dans l'instance créée, ici l'instance HTML,
- un stockage du résultat de l'insertion en mémoire vive,
- suivie de l'affichage d'une partie des subdivisions, en général une subdivision, dans la fenêtre créée, et d'un défilement dans cette même fenêtre des subdivisions selon une direction choisie afin de lire le contenu.

Le problème est que cette solution requiert un stockage de l'ensemble des subdivisions en mémoire vive avant d'être affichées dans la fenêtre. Le processeur et les mémoires, en particulier la mémoire vive, impliquées sont donc très sollicités; ce qui a pour conséquence une consommation importante à la fois du processeur et de la mémoire vive. Il en résulte aussi, lorsque le terminal est un terminal équipé d'une batterie, une consommation excessive de sa batterie. Une telle consommation réduit considérablement l'autonomie du terminal, ce qui n'est pas souhaitable.

L'invention vient améliorer la situation.

### L'invention

A cet effet, selon un aspect fonctionnel, l'invention a pour objet un procédé d'affichage d'un contenu numérique sur un écran d'un ordinateur incluant une mémoire pour stocker des données à afficher et un module d'affichage dont une exécution entraîne une création d'une instance dudit module, **caractérisé en ce que** ledit procédé comprend
- une étape de subdivisions du contenu,
- une étape d'exécution au cours de laquelle le module est exécutée plusieurs fois pour créer plusieurs instances dudit module,
- une étape de stockage d'une pluralité d'instances en mémoire et d'affichage d'une instance choisie parmi la pluralité d'instances stockées.

Selon l'invention, le module est exécuté plusieurs fois. En conséquence, plusieurs fenêtres, et non une seule comme dans l'état de la technique, sont accessibles pour l'affichage d'une subdivision respective. La charge du processeur est donc réduite car celui-ci affiche une subdivision dans une fenêtre, les autres subdivisions étant accessibles en mémoire pour être affichées.

Selon un mode de réalisation particulier, le nombre d'instances stockées en mémoire est inférieur au nombre de subdivisions. En d'autres mots, seule une partie des subdivisions est stockée dans la mémoire. On réduit donc la taille allouée aux subdivisions en mémoire et on réduit aussi en conséquence la consommation du processeur et donc de la batterie. Grâce à l'invention, un contenu peut être lu en consommant moins d'énergie.

Selon un autre mode de mis en oeuvre particulier de l'invention, pouvant être mis en oeuvre alternativement ou cumulativement avec le précédent mode, les subdivisions étant ordonnées entre elles, les instances stockées en mémoire sont des instances associées à des subdivisions contigües. Le stockage en mémoire des pages contigüe réduit le temps d'affichage et ce quelque soit le sens du passage à savoir un retour à une instance précédente à l'instance affichée, ou à une instance suivante de l'instance affichée.

Selon un aspect matériel, l'invention a trait à un terminal incluant un processeur relié à un écran, à un module d'affichage dont l'exécution entraîne une création d'une instance dudit module, **caractérisé en ce qu'**il comprend
- des moyens d'obtention d'un contenu subdivisé,
- des moyens d'exécution au cours de laquelle le module est exécuté plusieurs fois pour créer plusieurs instances dudit module associées à des subdivisions respectives,
- des moyens de stockage de la pluralité d'instances en mémoire et d'affichage d'une instance choisie parmi la pluralité d'instances stockées.

Selon un autre aspect matériel, l'invention a trait à un programme d'ordinateur comprenant des instructions de code qui, lorsqu'il est exécuté par un processeur, réalise les étapes du procédé défini ci-dessus.

L'invention sera mieux comprise à la lecture de la description qui suit, donnée à titre d'exemple et faite en référence aux dessins annexés.

### Les figures:

La figure 1 représente un terminal apte à afficher un contenu selon le procédé de l'invention.
La figure 2 représente schématiquement un contenu et ses subdivisions.
Les figures 3a à 3e illustrent schématiquement l'affichage et le stockage des subdivisions selon un premier mode de réalisation de l'invention.
La figure 4 est un algorithme illustrant les étapes d'un premier mode de réalisation du procédé de l'invention.
La figure 5 est un algorithme illustrant les étapes d'un deuxième mode de réalisation du procédé de l'invention.

### Description détaillée d'exemples de réalisation illustrant l'invention

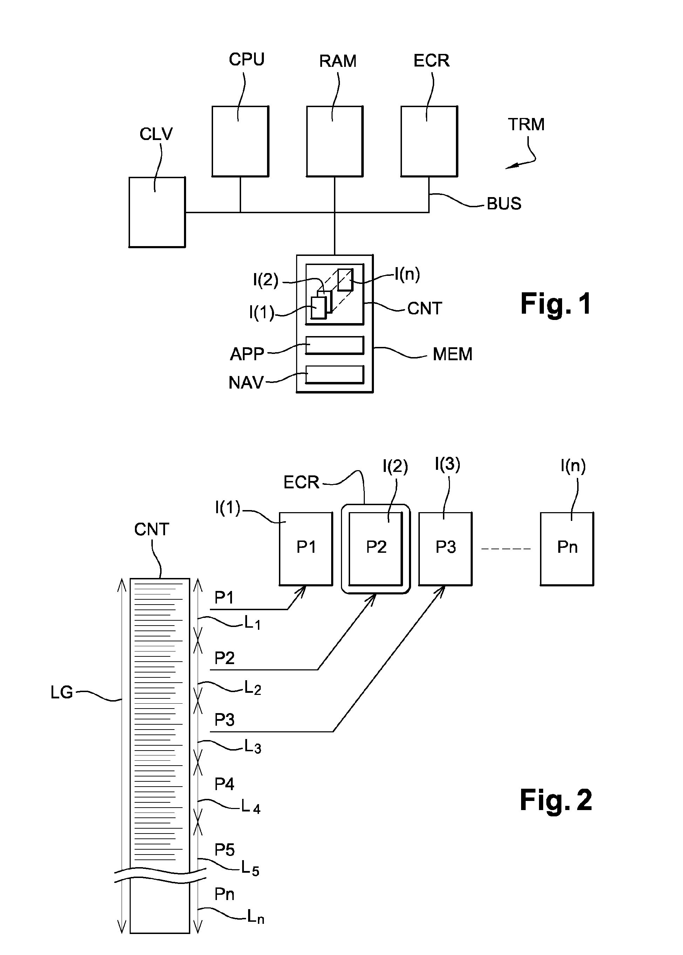

La figure 1 représente un terminal TRM équipé d'un microprocesseur CPU relié par l'intermédiaire d'un bus BUS à une mémoire de stockage non volatile MEM, une mémoire vive RAM, un écran ECR, des moyens de commande CLV tel qu'un clavier.

Le microprocesseur CPU est apte à commander l'affichage sur l'écran d'un contenu numérique. Le terminal comprend à cet effet un module d'affichage NAV apte à afficher un contenu sur l'écran à réception d'une commande d'affichage issue du microprocesseur CPU. Dans notre exemple, le module d'affichage est un navigateur de type Internet. Un tel navigateur est dans notre exemple le navigateur "Internet Explorer" connu de l'homme du métier.

Rappelons que l'invention s'applique tout particulièrement aux contenus dont la lecture nécessite une action de défilement du contenu sur l'écran par exemple de la part d'un utilisateur, une action pouvant être réalisée par exemple par le biais d'une manipulation sur l'écran si celui-ci est tactile ou par une action sur les touches d'un clavier du terminal si celui-ci est équipé d'un clavier. Un tel contenu est typiquement une page HTML ou xHTML, mais pourrait être une page au format PDF, ou autres.

Dans notre exemple, le contenu CNT à une longueur LG par exemple dont l'unité de mesure est en centimètre. Ce contenu est subdivisé en "n" subdivisions (n est un entier).

Supposons par exemple que l'écran soit rectangulaire et que la longueur d'une arête verticale soit de 20 cm. Supposons également que le contenu a une longueur LG égale à 160 cm. Dans cette configuration, en référence à la figure 2, le contenu sera subdivisé en 8 portions d'une longueur respective L1 à Ln de 20 cm.

On remarquera que la longueur de l'arête horizontale de l'écran importe peu pour l'élaboration des subdivisions.

Dans notre exemple, les subdivisions sont ordonnées. Les pages situées aux extrémités du livre, dites pages extrêmes Pext par la suite, à savoir la première et la dernière page, ont une seule page contigüe. Dans cette configuration, si le contenu est subdivisé en huit portions, la page contigüe à la première page P1 est la deuxième page P2 et la page contigüe à la huitième page P8 est la septième page P7. Les autres pages, dites pages intermédiaires Pint par la suite, ont deux pages contigües à savoir la page précédente et la page suivante conformément à l'ordre choisi. Par exemple, la deuxième page P2 à comme pages contigües la première page P1 et la troisième par P3; la troisième page P3 à comme pages contigües la deuxième page P2 et la quatrième page P4, et ainsi de suite.

La taille des subdivisions est choisie judicieusement de telle sorte qu'une subdivision peut être affichée sur l'écran ECR, par exemple en plein écran, et que la lecture d'une subdivision ne nécessite pas de défilement sur l'écran.

Le terminal TRM comprend une application APP aptes à exécuter le module d'affichage NAV pour l'affichage des subdivisions et à séquencer l'affichage des pages P1 à Pn. Dans notre exemple, l'application APP est stockée dans la mémoire de stockage non volatile MEM. L'application, lorsqu'elle est exécutée par le microprocesseur CPU, exécute le module d'affichage, à savoir dans notre exemple un navigateur Internet.

Selon l'invention, lorsque l'application APP est exécutée, cette dernière exécute plusieurs fois le module d'affichage NAV de façon à créer plusieurs instances du navigateur internet associées à des pages respectives. Si les pages sont ordonnées, l'application APP respecte l'ordre lors de la restitution à l'écran.

On comprend donc que selon l'invention le processeur CPU gère la séquence d'affichages de plusieurs instances, contrairement à l'état de la technique dans le quel le processeur gère la séquence d'affichages de plusieurs pages dans une même instance du navigateur NAV.

Un premier mode de réalisation va être décrit en référence aux figures 2 à 4.

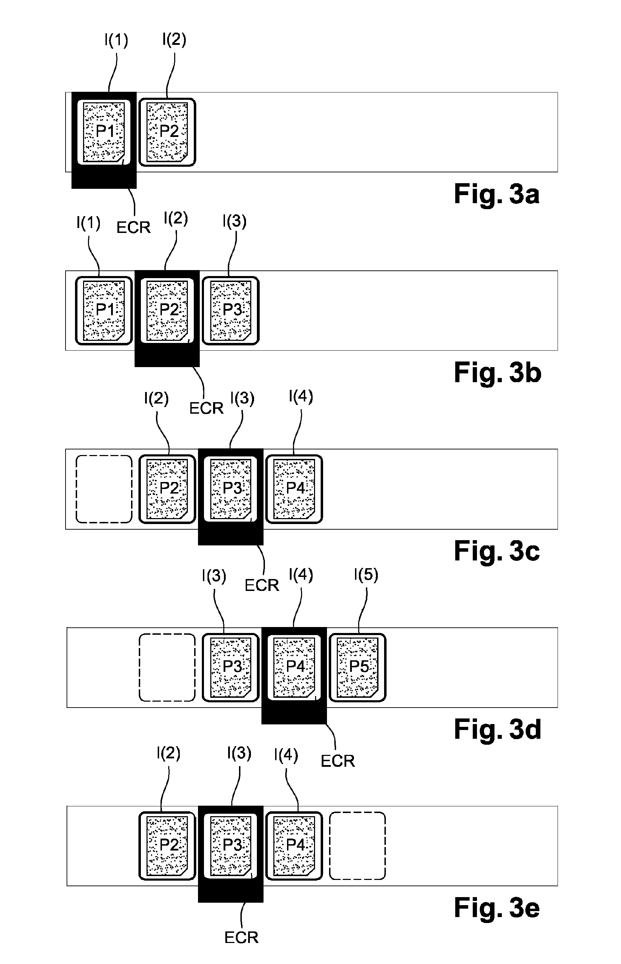

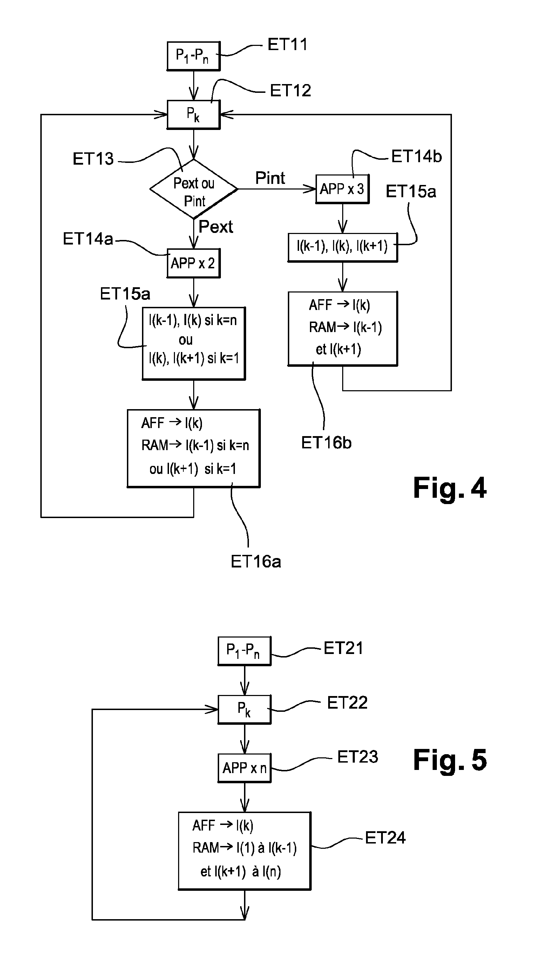

La figure 2 illustre un contenu CNT subdivisé en "n" portions. Les subdivisions sont stockées dans la mémoire non volatile MEM. Les figures 3a à 3e illustrent un premier mode de réalisation du procédé d'affichage et la figure 4 est un algorithme incluant plusieurs étapes correspondant à ce premier mode de réalisation de la figure 3.

Sur les figures 3a à 3e l'instance affichée apparaît dans un cadre sur fond noir référencé ECR pour illustrer l'instance affichée. Sur ces mêmes figures, les autres instances, c'est-à-dire celles situées hors de l'écran correspondent aux instances stockées en mémoire vive RAM.

Lors d'une première phase, une sélection de l'application est effectuée pour consulter un contenu CNT. La sélection est réalisée par exemple par un utilisateur du terminal TRM. Dans notre exemple, la sélection s'effectue au moyen d'un écran tactile sur lequel une action de l'utilisateur entraîne l'envoi d'une commande de sélection au processeur CPU.

Le processeur CPU reçoit la commande de sélection.

Le processeur exécute ensuite l'application APP qui réalise, en référence à la figure 4, les étapes suivantes ET11 à ET16a/ET16b.

Une première étape de subdivision ET11 du contenu en subdivisions P1-Pn (n est un entier), chaque subdivision ayant, dans notre exemple, une taille telle que chaque subdivision peut être lue sur l'écran sans nécessiter une action de défilement sur l'écran. Cette étape peut naturellement avoir lieu avant exécution de l'application.

Lors d'une deuxième étape ET12, une page Pn (n est un entier compris entre 1 et n) est sélectionnée pour être affichée.

Ensuite, lors d'une troisième étape ET13, une étape de détermination de la position de la page est réalisée. Dans notre exemple, cette étape de détermination consiste à déterminer si la page est une page extrême Pext ou une page intermédiaire Pint.

Dans notre exemple, l'application requiert ensuite, selon que la page est une page extrême ou une page intermédiaire, lors d'une quatrième étape respective ET14a ou ET14b, plusieurs exécutions du navigateur NAV pour obtenir plusieurs instances respectives du navigateur. Dans notre exemple, si la page à afficher est une page extrême Pext, le navigateur est exécuté deux fois (ET14a) et si la page est une page intermédiaire (ET14b), le navigateur est exécuté trois fois. Il en résulte deux voire trois instances du navigateur aptes à afficher trois pages respectives du livre selon que la page à afficher est une page extrême ou intermédiaire, respectivement.

Dans notre exemple, optionnellement, l'application ordonne ensuite, lors d'une cinquième étape ET15a ou ET15b, les instances issues de l'étape d'exécution, de façon à respecter l'ordre des subdivisions par exemple lorsque le contenu est un livre numérique dont les pages respectent un ordre.

Dans la suite I(k) désignera l'instance associée à la page Pk

Si la page Pk à afficher est une page extrême Pext, l'ordre suivant est créé:
- I(k) suivi de I(k+1) si k=1, ou
- I(k) précédé de I(k-1) si k=n.

Si la page est une page intermédiaire l'ordre créé est le suivant:
- I(k) suivi de I(k+1) et précédé de I(k-1).

Ensuite, lors d'une sixième étape, ET16a ou ET16b selon que la page est une page extrême ou intermédiaire, respectivement, l'application insère dans chaque instance une subdivision. Les subdivisions à insérer sont choisies judicieusement. Dans notre exemple, Celles-ci sont des subdivisons contigües afin de respecter l'ordre de lecture.

Ainsi, si la page Pk est une page extrême, l'instance affichée est l'instance I(k) et l'instance stockée dans la mémoire vive RAM est I(k-1) si k=n ou I(k+1) si k=0.

Lors de la sixième étape ET16a ou ET16b, l'application APP commande au processeur CPU l'affichage d'une instance et le stockage en mémoire RAM d'une ou plusieurs instances à savoir dans notre exemple les instances contigües à l'instance affichée.

Ainsi, si la page Pk est une page extrême, le processeur CPU commande l'affichage de l'instance I(k) et le stockage en mémoire vive RAM des instances I(k-1) si k=n et I(k+1) si k=0 (ET16a).

Si la page Pk est une page intermédiaire, le processeur CPU commande l'affichage de l'instance I(k) et le stockage en mémoire vive RAM des instances I(k-1) et I(k+1) (ET16b).

Les étapes ET12 à ET16 s'exécute pour chaque page Pk à afficher.

Dans notre exemple, on considère que l'application, suite à son exécution, affiche par défaut la première instance I1 associée à la première page P1 du livre et requiert le stockage de l'instance contigüe à savoir la deuxième instance associée à la deuxième page P2 (figure 3a).

Ensuite, en référence à la figure 3b, l'utilisateur commande un affichage de la deuxième page P2 stockée en mémoire. Il s'ensuit un affichage de la deuxième page P2 et d'un stockage en mémoire vive des instances contigües à savoir les instances I1 et 13 associées à la première page P1 et à la troisième page P3, respectivement.

On considère ensuite, en référence à la figure 3c, que l'utilisateur souhaite afficher la troisième page P3. Une commande d'affichage de la troisième page est reçue par l'application qui commande au processeur l'affichage de cette troisième page et le stockage des instances contigües à savoir la deuxième instance associée à la deuxième page et la quatrième instance associée à la quatrième page P4, et ainsi de suite.

On considère ensuite, en référence à la figure 3d, que l'utilisateur souhaite afficher la quatrième page P4. Une commande d'affichage de la quatrième page P4 est reçue pas l'application qui commande au processeur l'affichage de quatrième page P4 et le stockage des instances contigües à savoir la troisième instance associée à la troisième page et la cinquième instance associée à la cinquième page P5, et ainsi de suite jusque la dernière instance.

Aussi, l'utilisateur peut souhaiter afficher les pages dans un sens inverse au précédent. Supposons, en référence à al figure 3e, que la page courante affichée soit la quatrième page P4 et que l'utilisateur souhaite visualiser la troisième page. Dans cette configuration, l'utilisateur commande un affichage de la quatrième page P4 stockée en mémoire. Il s'ensuit un affichage de la quatrième page P4 et d'un stockage en mémoire vive des instances contigües à savoir les instances associées à la troisième page P3 et à la cinquième page P5.

Le nombre d'instances contigües à stocker est quelconque; celui-ci sera choisi judicieusement par exemple en fonction du livre numérique concerné. Par exemple, si le livre est un roman, le stockage des instances contigües à l'image affichée suffit car lors de la lecture les pages sont lues successivement toujours dans le même ordre et le nombre de saut de pages est très souvent l'unité.

Par contre, la lecture d'un magazine ne respecte pas toujours l'ordre des pages et le nombre de sauts est quelconque. Dans cette dernière configuration, plusieurs instances contigües, voire non contigües, peuvent être stockées en mémoire vives.

A noter que à la quatrième étape (ET14b) de ce premier mode, seule l'instance contigüe associée à la page suivante peut être stockée en mémoire au lieur des deux pages contigües. En effet, si le contenu est un roman, la probabilité de retour en arrière d'une page Pk vers une page P(k-1) est rare.

La figure 5 illustre une deuxième mode de réalisation dans lequel l'application est exécuté un nombre de fois égal au nombre de subdivisions. Ce deuxième mode comprend plusieurs étapes référencées ET21 à ET24.

Une première étape ET21 relative à ce deuxième mode est similaire à la première étape ET11 de subdivisions du contenu en "n" pages référencée P1 à Pn.

La deuxième étape ET22 relative à ce deuxième mode est similaire à la deuxième étape ET21 relative au premier mode.

Ensuite, lors d'une troisième étape ET23 relative à ce deuxième mode, l'application est exécutée un nombre de fois égal au nombre de subdivisions.

Ensuite, lors d'une quatrième étape ET24 relative à ce deuxième mode, l'instance I(k) est affichée et toutes les autres instances sont stockées en mémoire vive RAM prêtes à être affichées.

Ce deuxième mode de mise en oeuvre est adapté aux contenus dont la lecture est aléatoire contrairement au premier mode de réalisation dans lequel la lecture des pages était ordonnée et dans lequel le stockage d'instances contigües à l'instance affichée apportait un réel avantage de réduction de consommation des ressources dans le terminal.

## Revendications

1. Procédé d'affichage d'un contenu numérique (CNT) sur un écran (ECR) d'un terminal (TRM) incluant des moyens de stockage (MEM,RAM) pour stocker un contenu à afficher sur l'écran et un module d'affichage (NAV) dont une exécution entraîne une création d'une instance dudit module, **caractérisé en ce que** ledit procédé comprend
- une étape (ET11) d'obtention de subdivisions (P1-Pn) du contenu,
- une étape d'exécution (ET14a, ET14b) au cours de laquelle le module (NAV) est exécutée plusieurs fois pour créer plusieurs instances dudit module, les instances crées étant associées à des subdivisions respectives (P1-Pn),
- une étape de stockage (ET16a, ET16b) d'une pluralité d'instances dans les moyens de stockage et d'affichage d'une instance choisie parmi la pluralité d'instances stockées.

2. Procédé d'affichage selon la revendication 1, **caractérisé en ce que** le nombre d'instances stockées en mémoire est inférieur au nombre de subdivisions.

3. Procédé d'affichage selon la revendication 2 **caractérisé en ce que** les subdivisions sont ordonnées entre elles et **en ce que** les instances stockées en mémoire sont des instances associées à des subdivisions contigües.

4. Terminal (TRM) incluant un processeur (CPU) relié à un écran (ECR), à un module d'affichage (NAV) dont l'exécution entraîne une création d'une instance (I(k)) dudit module, **caractérisé en ce qu'**il comprend
a. Des moyens d'obtention d'un contenu (CTN) subdivisé (P1-Pn),
b. Des moyens d'exécution (CPU) au cours de laquelle le module (NAV) est exécuté plusieurs fois pour créer plusieurs instances dudit module associées à des subdivisions respectives,
c. Des moyens de stockage (RAM) de la pluralité d'instances en mémoire et d'affichage (ECR) d'une instance choisie parmi la pluralité d'instances stockées.

5. Programme d'ordinateur (APP) comprenant des instructions de code qui, lorsqu'il est exécuté par un processeur, réalise les étapes du procédé défini à la revendication 1.
